# EUROPÄISCHE PATENTSCHRIFT

(11) **EP 1 276 999 B1**
(45) Veröffentlichungstag und Bekanntmachung des Hinweises auf die Patenterteilung: **14.02.2007**
(21) Anmeldenummer: 01943268.1
(22) Anmeldetag: 19.04.2001
(51) Int. Cl.: F16D 69/02

(54) **Verwendung von CYANATBASIERTEn KLEBSTOFFEn FÜR und in Kombination mit REIBBELÄGEN SOWIE VERFAHREN ZUM HERSTELLEN VON AUF EINER UNTERLAGE HAFTENDEN REIBBELÄGEN**
Use of CYANATE-BASED ADHESIVES FOR AND IN COMBINATION WITH FRICTION LININGS AND METHOD FOR PRODUCING FRICTION LININGS THAT ADHERE TO A SUPPORT
UTILISATION D'UN ADHESIF A BASE DE CYANATE, DESTINE A, ET EN COMBINAISON AVEC DES REVETEMENTS D'ADHERENCE, AINSI QUE PROCEDE DE REALISATION DE REVETEMENTS D'ADHERENCE ADHERANT A UN SUPPORT

(30) Priorität: 19.04.2000 DE 10019475; 22.05.2000 DE 10025251
(43) Veröffentlichungstag der Anmeldung: 22.01.2003
(73) Patentinhaber: Fraunhofer-Gesellschaft zur Förderung der angewandten Forschung e.V., 80686 München (DE)
(72) Erfinder: BAUER, Monika, 15754 Senzig (DE); BAUER, Jörg, 15754 Senzig (DE); SEVERIT, Petra, 51469 Bergisch Gladbach (DE)
(74) Vertreter: Olgemöller, Luitgard Maria
(86) Internationale Anmeldenummer: PCT/EP2001/004476
(87) Internationale Veröffentlichungsnummer: WO 2001/081492

(56) Entgegenhaltungen:
- EP-A- 0 554 902
- WO-A-96/20242
- US-A- 4 645 805
- US-A- 5 143 785

## Beschreibung

Die vorliegende Erfindung betrifft ein Material zum Verkleben von Reibbelägen auf Substraten/Unterlagen sowie aufeinander abgestimmte Systeme, bestehend aus Reibmaterialien und Klebstoffen bzw. aus mit Klebern auf einer Unterlage haftenden Reibbelägen. Insbesondere können mit der vorliegenden Erfindung verbesserte Bremsbeläge geschaffen werden.

Bremsbeläge sind hochsicherheitskritische Bauteile, die extremen thermischen und mechanischen Beanspruchungen ausgesetzt sind. Um den Belagverschleiß gering zu halten, müssen die organischen Bestandteile hohe thermische Beständigkeit besitzen. Weitere Anforderungen an das Reibmaterial sind Reibwertkonstanz bei geforderter Reibwerthöhe über einen breiten Temperaturbereich. Die Klebefuge zwischen Bremsbelag und Rückenplatte (Substrat) ist ebenfalls extrem hohen thermomechanischen Belastungen ausgesetzt. Auch bei langanhaltender thermischer Belastung ist die Haftung zwischen Reibmaterial und Rückenplatte zu gewährleisten.

Für Bremsbeläge und dergleichen verwendete Reibmaterialien sind hochgefüllte Systeme, die üblicherweise anorganische und/oder organische Fasern, häufig mineralische Füllstoffe und ggf. weitere Bestandteile wie Metalle, Oxide, Gleit- und/oder Schmierstoffe enthalten. Je nach Anforderungsprofil sind die einzelnen Rohstoffe unterschiedlich proportioniert. Diese Bestandteile werden durch ein organisches Bindemittel zusammengehalten, das üblicherweise in einer Menge von etwa 5 bis 20 Gew.-% zugesetzt wird. In ausgehärtetem Zustand erhält der Reibbelag durch das Bindemittel die notwendige Festigkeit. Solche Reibmaterialien mit Phenolharzen als Bindemittel sind beispielsweise in der US-Patentschrift 4.373.038 oder der US-Patentschrift 4.096.108 beschrieben. Aufgrund ihrer hohen thermischen Beständigkeit bieten sich aber auch Cyanatharze als Bindemittel in Reibbelägen an. Der Vernetzungsmechanismus durch Polyaddition bietet außerdem verarbeitungstechnische Vorteile. Der Einsatz von Cyanatharzen in Bindemitteln für Reibmaterialien ist beispielsweise in der US-Patentschrift 4.944.373, der US-Patentschrift 4.929.159 und der europäischen Patentschrift EP 554 902 B1 beschrieben. Die dort beschriebenen Reibmischungen sollen auch bei hohen thermischen Belastungen verbesserte Reibeigenschaften aufweisen.

Zur Herstellung von Reibbelägen werden die homogen gemischten Komponenten unter definierten Druck-, Temperatur- und Zeitvorgaben auf einer Belagrückenplatte, auf der ein Klebstoff aufgebracht ist, verpreßt. Damit nach dem Preßvorgang der Belag formschlüssig mit der Rückenplatte verbunden ist und eine ausreichende Haftung zwischen Reibmaterial und Trägerplatte besteht, muß der Formgebungsprozeß bei erhöhter Temperatur erfolgen. Anschließend wird der Belag bei Temperaturen bis zu ca. 300°C ausgehärtet.

Der Klebstoff enthält üblicherweise ein organisches Bindemittel, meist eine Mischung aus Phenolharzen und Kautschuken. In der US 4.944.373 ist auch vorgeschlagen worden, hierfür einen polyfunktionellen Cyanatester zu verwenden. Der Preßvorgang erfolgt in allen Fällen bei hohen Temperaturen, so bei 170°C gemäß US 4.944.373.

Cyanatester werden im Übrigen auch als Klebstoffe in anderen technischen Bereichen eingesetzt. So offenbart die US 5,143,785 einen Cyanatharz-Kleber mit einem bifunktionellen Cyanat, einem thermoplastischen Polymer und Lösungsmittel zur Anwendung auf elektronischem Gebiet. Die US 4,404,330 beschreibt einen Cyanatharz-Kleber ähnlicher Zusammensetzung, bei der das Cyanatharz in Form eines Präpolymeren mit einem Maleimid vorliegt.

Die thermische Beständigkeit der Klebefuge zwischen Reibbelag und Belagrückenplatte und damit die Leistungsgrenze des Gesamtsystems ist bei Einsatz von Phenolharzen und Kautschuken durch die thermomechanischen Eigenschaften des Novolaks und des Kautschuks begrenzt. So wurde festgestellt, daß sich zumindest cyanatharzbasierte Reibbeläge sofort nach dem Verpressen von der Trägerplatte ablösen, wenn zur Verklebung Phenolharzklebstoffe verwendet wurden. Die Notwendigkeit, während des Formgebungsprozesses Wärme zuzuführen, gestaltet den Prozeßvorgang technologisch sehr aufwendig. Technologische Optimierungen sind mit phenolharzgebundenen Klebstoffen nicht umsetzbar.

Der vorliegenden Erfindung lag die Aufgabe zugrunde, einen verbesserten Klebstoff für das Verkleben von Reibmaterialien auf einem Substrat bereitzustellen, der die Formgebung bzw. das Verpressen der Materialien auch bei Raumtemperatur ermöglicht. Vorzugsweise soll ein Klebstoff bereitgestellt werden, der eine besonders gute Haftung des Reibmaterials auf der Unterlage gewährleistet. Außerdem soll die Erfindung mit Kleber auf einem Substrat befestigte Reibbeläge sowie Kits hierfür bereitstellen.

Überraschenderweise hat sich herausgestellt, daß die Aufgabe der Erfindung durch Bereitstellung eines Klebstoffs gelöst wird, der 5-80 Gew.-% Cyanatharz, 5-30 Gew.-% organisches Polymer, ausgewählt unter natürlichem und synthetischem Kautschuk und thermoplastischen Polymeren, 0-20 Gew.-% eines Verstärkungsmaterials und ggf. weitere Zusatzstoffe und Hilfsmittel enthält. Das Verpressen der Reibmaterialmischung auf der Belagrückenplatte kann mit diesem Klebstoff bei Raumtemperatur erfolgen.

Das Cyanatharz der vorliegenden Erfindung basiert auf oder besteht aus Cyanaten, vorzugsweise polyfunktionellen Cyanaten. Besonders geeignet sind z.B. bifunktionelle Cyanate der Formel (I) 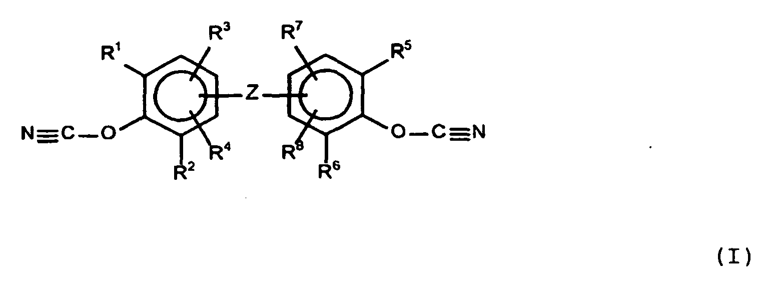 worin R¹ bis R⁴ und R⁵ bis R⁸ unabhängig voneinander Wasserstoff, fakultativ substituiertes C₁-C₁₀-Alkyl, fakultativ substituiertes C₃-C₈-Cycloalkyl, fakultativ substituiertes C₁-C₁₀-Alkoxy, Halogen, Phenyl oder Phenoxy sein können. Z kann eine chemische Bindung, SO₂ CH₂, CH(CH₃), Isopropylen, Hexafluorisopropylen, n-oder iso-C₁-C₁₀-Alkylen, O, NR⁹, N=N, CH=CH, C (O) O, CH=N, CH=N-N=CH, Alkylenoxyalkylen mit 1 bis 8 Kohlenstoffatomen in der einen Alkylengruppe und 0 bis 8, vorzugsweise bis 5 Kohlenstoffatomen in der anderen Alkylengruppe, S, Si(CH₃)₂ oder 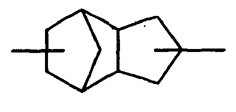 sein.

Geeignet sind weiter polyfunktionelle Cyanate der Formel (II): 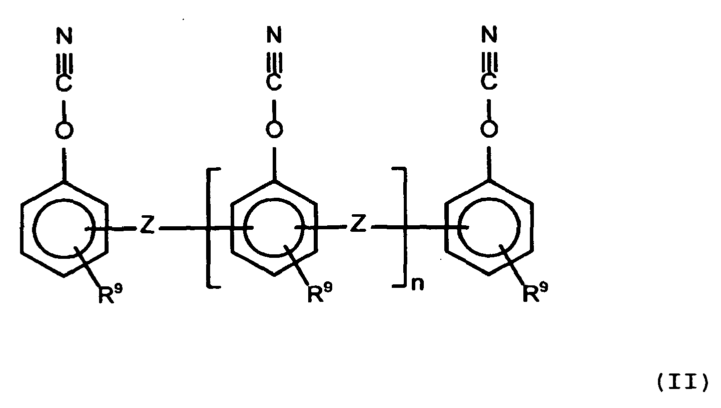 worin R⁹ Wasserstoff oder C₁-C₁₀-Alkyl und n 0 bis 20 ist und Z die unter Formel (I) genannte Bedeutung hat.

Auch einkernige, bifunktionelle Monomere der Formel (III) sind geeignet: 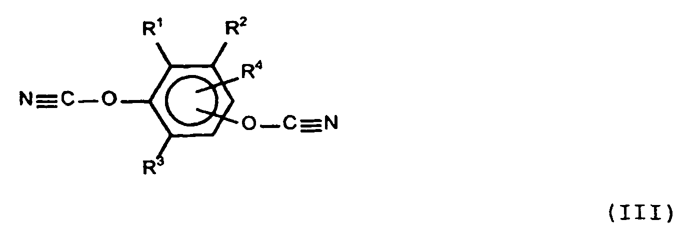 worin R¹ bis R⁴ unabhängig voneinander Wasserstoff, fakultativ substituiertes C₁-C₁₀-Alkyl, fakultativ substituiertes C₃-C₈-Cycloalkyl, fakultativ substituiertes C₁-C₁₀-Alkoxy, Halogen, Phenyl oder Phenoxy sein können.

Für das erfindungsgemäß einsetzbare Cyanatharz können ein oder mehrere Cyanate, vorzugsweise ausgewählt unter den vorgenannten Polycyanaten, als Monomer(e) oder in präpolymerisierter Form, eingesetzt werden. Gegebenenfalls können zusätzlich Novolake (Phenolharzlacke), Phenole, deren Präpolymere, Bismaleimide und/oder Epoxide zugemischt und/oder ggf. copolymerisiert werden. Bevorzugt beträgt der Anteil an zusätzlichen Materialien neben den Cyanaten, z.B. der Novolakanteil, bis zu 20 Gew.-% im Cyanatharz.

Die Umsetzung zum Cyanatharz kann gegebenenfalls bei höheren Temperaturen (z.B. bei 120-170°C) erfolgen. Es kann vorteilhaft sein, diese Umsetzung in Abwesenheit von Sauerstoff zu bewirken. Das erhaltene Präpolymer ist bei höheren Temperaturen häufig eine mehr oder weniger viskose Flüssigkeit.

Vorzugsweise enthält der Klebstoff nicht mehr als 50 Gew.-% des genannten Cyanatharzes, ganz besonders bevorzugt zwischen 15 und 30 Gew.-%.

Weiterhin ist es bevorzugt, daß das Cyanatharz des Klebstoffs in Hinblick auf eine gute Verträglichkeit mit dem Bindemittel im einzusetzenden Reibmaterial ausgewählt wird, wobei es besonders erwünscht ist, daß dasselbe oder ein chemisch ähnliches Cyanatharz sowohl für den Kleber als auch in der Reibmaterialmischung eingesetzt wird.

Das organische Polymer des Klebers dient als elastifizierende Komponente und kann beliebig unter natürlichen und synthetischen Kautschuken sowie Thermoplasten oder einer Mischung aus beidem ausgewählt werden. Beispiele für Thermoplaste oder Kautschuke sind Phenolharze, SBR oder Nitrilgummi. Mit diesen Bestandteilen lassen sich die mechanischen Eigenschaften und die Klebfestigkeit beeinflussen. Bevorzugt enthält der Klebstoff weiterhin ein Verstärkungsmittel, wie es auch in bekannten Reibmaterialmischungen enthalten ist, wobei es besonders bevorzugt ist, daß die Bestandteile dieses Verstärkungsmittels dieselben oder ähnlich denen sind, die für die vorgesehene Reibmaterialmischung verwendet werden. Insbesondere kann es sich dabei um organische oder anorganische Fasern wie Aramidfasern, Stahlwolle oder Mineralfasern und/oder um anorganische Füllmittel wie Mineralpulver und/oder Oxidpulver, z.B. Glimmerpulver oder Magnesium- oder Eisenoxidpulver, Talkum, Magnesiumhydroxidpulver, Bariumsulfat oder dgl. handeln. Bevorzugt ist dieses Mittel in einer Menge von 3-15 Gew.-% enthalten. Der Zusatz des Verstärkungsmittels verbessert die Angleichung der zu verklebenden Teile, wenn verwandte oder identische Verstärkungsmittel auch in der eingesetzten Reibmaterialmischung vorhanden sind.

Der Klebstoff kann weitere Zusätze enthalten wie Schwefel (um eine Vulkanisierung vorhandenen Kautschuks während des Aushärtens zu bewirken), Gleitmittel und Modifikatoren, z.B. Graphit, Kaliumtitanat oder Molybdändisulfid, Metallpulver (z.B. Kupfer, Eisen oder Messing), Cashewnußschalen-Pulver oder dergleichen. Ein Katalysator für die Aushärtung der organischen Komponenten und oder ein Weichmacher können ebenfalls vorhanden sein.

Eine für den erfindungsgemäßen Kleber gut geeignete Mischung aus dem Verstärkungsmittel und weiteren Bestandteilen ist die in Tabelle I der US 4.373.038 angegebene Mischung (ohne Phenolharz und ohne Nitrilgummi).

Zum Aufbringen auf einem Substrat wird der Klebstoff ggf. _{"}trocken" angerührt oder aber in einem geeigneten Lösungsmittel gelöst/suspendiert. Für Cyanate geeignete Lösungsmittel sind dem Fachmann bekannt. Gut geeignet sind beispielsweise Ketone und Ether. Ein vorliegend gut einsetzbares Lösungsmittel ist Methylethylketon. Die Lösungsmittelmengen sind nicht kritisch; geeignet sind z.B. etwa 10 bis 200 Gew.-%, vorzugsweise etwa 100 bis 150 Gew.-%, bezogen auf das Gesamtgewicht der Klebstoffbestandteile.

Die Klebstofflösung/-suspension wird vorzugsweise in einer Menge von 0,01 g/cm bis 0,1 g/cm auf das Substrat aufgebracht.

In einer besonderen Ausgestaltung der Erfindung wird der Klebstoff in Kombination mit einer Reibmaterialmischung für einen Reibbelag eingesetzt, die etwa 2 bis 50 Gew.-%, bevorzugt etwa 2 bis 20 Gew.-% eines Cyanatharzes enthält, das bevorzugt aus den Komponenten besteht, wie sie voranstehend für den Klebstoff definiert wurden. Das Cyanatharz von Kleber und Reibmaterial muß nicht dasselbe sein, ist es aber bevorzugt. Die Reibmaterialmischung enthält weiterhin ein Verstärkungsmittel in einem Anteil von 45-98 Gew.-%, bevorzugt 80-90 Gew.-%, wie es bereits oben für den Klebstoff beschrieben wurde. Das Verstärkungsmittel dient der Erhöhung des Reibwiderstandes. Der Zusatz von Modifikatoren, Plastifizierern, Vernetzungsbeschleunigern und dergleichen ist ebenfalls möglich und dem Fachmann geläufig.

Nach Aufbringen des Klebers auf die entsprechende Belagträgerplatte wird die Reibmaterialmischung aufgetragen und verpreßt. Das Verpressen kann bei Raumtemperatur erfolgen, die Temperatur kann beim Verpressen aber auch bis zu 200°C betragen. Die Preßdauer liegt im allgemeinen im Bereich von wenigen Sekunden (z.B. 1 bis 10 s), kann aber auch mehrere Minuten (z.B. bis zu ca. 10 min.) dauern. Nach der Formgebung wird unter Hitzeeinwirkung gehärtet, wobei auch der Kleber einer Nachhärtung unterworfen wird, wodurch ein gut auf der Unterlage haftender Reibbelag entsteht.

Völlig überraschend wurde festgestellt, daß die erfindungsgemäßen Klebstoffe bei Raumtemperatur eingesetzt werden können. Ein Formgebungsprozeß bei Raumtemperatur wurde damit erstmals möglich. Es wurde gefunden, daß durch das Verpressen von Reibmaterialmischungen bei Raumtemperatur die thermische Beständigkeit und die Reibeigenschaften des Reibmaterials deutlich verbessert werden können. Zusätzlich bewirkt die Abstimmung der chemischen Bestandteile von Klebstoff und Reibmaterial, daß die thermische Beständigkeit und damit die Zuverlässigkeit des Gesamtsystems bei sowohl beheiztem als auch unbeheiztem Preßvorgang deutliche verbessert werden konnte.

Nachstehend wird die Erfindung anhand von Beispielen näher erläutert, wobei die Beispiele 1 - 4 die Herstellung erfindungsgemäßer Klebstoffe und die Beispiele 5 und 6 erfindungsgemäße Kombinationen von Klebstoff und Reibmaterialien/Reibbelag zeigen.

### Beispiel 1:

60 g des Novolakcyanats Primaset PT 15 der Lonza AG (ein Novolakcyanat mit in ortho-Stellung verbrückten Phenylcyanatgruppen) werden in 70 g Methylethylketon gelöst. 30 g eines Acrylnitril-Butadien-Kautschuks (Baymod N 3482 der Polysar-Bayer Company) werden ebenfalls in 70 g Methylethylketon gelöst. Die beiden Lösungen werden vermischt, und der Mischung werden 5 g eines Novolaks (Cellobond J 1077 der Bladgen Cellobond), 5 g Schwefel, 12 g kommerziell erhältlicher Klebstoff (Bostik 1745/1 der Deutschen Hutchinson GmbH) und 10 g der in Tabelle 1 der US 4.373.038 beschriebenen Reibmaterialmischung (ohne Phenolharz, ohne Nitrilgummi) eingerührt.

### Beispiel 2:

Beispiel 1 wurde wiederholt, mit der Änderung, daß anstelle des Novolakcyanats Primaset PT 15 der Lonza AG das Novolakcyanat Primaset PT 60 desselben Herstellers verwendet wurde.

### Beispiel 3

Beispiel 2 wurde wiederholt, mit der Änderung, daß anstelle von 30 g Baymod N 3482 30 g Vitel 3200 (Bostik) eingesetzt wurden.

### Beispiel 4

Beispiel 1 wurde wiederholt, mit der Änderung, daß anstelle des Novolakcyanates Primaset PT 15 der Lonza AG das Novolakcyanat Primaset CT 90 derselben Firma eingesetzt wurde und daß anstelle von Cellobond J 1077 (Bladgen Cellobond) 5 g PR 97391 der Plasta Erkner GmbH in die homogene Mischung aus Novolakcyanat und Baymod eingerührt wurden.

### Beispiel 5

Kombination von erfindungsgemäßem Kleber mit phenolharzbasierten Reibbelägen

Die Klebstoffe der Beispiele 1 und 2 wurden in einer Menge von etwa 0,03 g/cm² gleichmäßig auf verschiedene Belagträgerplatten aufgebracht.

Jeweils 200 g einer Standardreibmaterialmischung (hergestellt gemäß Tabelle I, Probe 1 der US 4.373.038) wurden auf jede der Belagträgerplatten (52 cm²) gegeben und 10 s bei Raumtemperatur und 150 bar verpreßt. Nach dem Preßvorgang waren die Beläge formschlüssig mit der Belagrückenplatte verbunden. Nach dem Härten zeigten die Systeme Abscherwerte von 322 N/mm² (Klebstoff des Beispiels 1) bzw. 326 N/mm² (Klebstoff des Beispiels 2) bei Bruch im Reibmaterial.

### Beispiel 6

Kombination von erfindungsgemäßem Kleber mit cyanatharzbasierten Reibbelägen
(a) Zur Herstellung eines ersten cyanatgebundenen Reibbelags (Reibbelag A) wurden 62 g des Novolakcyanatharzes Primaset PT 15 der Lonza AG unter Rühren in 31 g Methylethylketon gelöst. Nach der in US Patent US 4.373.038 (Tabelle I, Probe 1) angegebenen Zusammensetzung, jedoch ohne das Phenolharz, wurden 938 g Reibmaterialmischung hergestellt. Unter Rühren wurde das gelöste Cyanatharz in die Reibmaterialmischung eingebracht.
(b) Zur Herstellung eines weiteren cyanatgebundenen Reibbelags (Reibbelag B) wurde das Verfahren gemäß (a) wiederholt, mit der Änderung, daß anstelle des Novolakcyanatharzes Primaset PT 15 62 g des Novolakcyanatharzes Primaset PT 60 verwendet wurden.
(c) Zur Herstellung eines dritten cyanatgebundenen Reibbelags (Reibbelag C) wurde das Verfahren gemäß (a) wiederholt, mit der Änderung, daß anstelle des Novolakcyanatharzes Primaset PT 15 62 g des Novolakcyanatharzes Primaset CT 90 in Kombination mit 7 g des Novolakes PR 97391 von Plasta Erkner GmbH verwendet wurde.

Die Klebstoffe der Beispiele 2 und 3 wurden in einer Menge von etwa 0,03 g/cm² gleichmäßig auf verschiedene Belagträgerplatten aufgebracht.

Jeweils 200 g der erhaltenen Cyanatharz-Reibmaterialmischung (A) wurden auf jeweils eine dieser Belagträgerplatten (52 cm²) gegeben und 10 s bei Raumtemperatur und 150 bar verpreßt. Nach dem Preßvorgang waren die Beläge formschlüssig mit der Belagrückenplatte verbunden. Nach dem Härten zeigten die Systeme Abscherwerte von 299 N/mm² (Klebstoff des Beispiels 2) bzw. 337 N/mm² (Klebstoff des Beispiels 3) bei Bruch im Reibmaterial.

200 g der erhaltenen Cyanatharz-Reibmaterialmischung (B) wurde auf eine mit dem Kleber des Beispiels 2 versehene Belagträgerplatte gegeben und 10 s bei Raumtemperatur verpreßt. Nach dem Preßvorgang war der Belag formschlüssig mit der Belagrückenplatte verbunden. Nach dem Härten zeigte das System Abscherwerte von 318 N/mm² bei Bruch im Reibmaterial.

200 g der erhaltenen Cyanatharz-Reibmaterialmischung (C) wurde auf eine mit dem Kleber des Beispiels 4 versehene Belagträgerplatte gegeben und 10 s bei Raumtemperatur verpreßt. Nach dem Preßvorgang war der Belag formschlüssig mit der Belagrückenplatte verbunden. Nach dem Härten zeigte das System Abscherwerte von 315 N/mm² bei Bruch im Reibmaterial.

### Vergleichsbeispiel 1

Kombination eines phenolharzbasierten Klebers mit einem cyanatharzbasierten Reibbelag

Der kommerziell erhältliche Klebstoff Bostik 1745/1 der Deutschen Hutchinson GmbH wurde gleichmäßig auf eine Belagträgerplatte aufgebracht. 200 g der erhaltenen Cyanatharz-Reibmaterialmischung (A) wurde auf diese Belagträgerplatte gegeben und 10 s bei Raumtemperatur verpreßt. Nach dem Preßvorgang bestand keine Haftung zwischen dem Belag und der Rückenplatte.

### Vergleichsbeispiel 2

Vergleichsbeispiel 1 wurde wiederholt, mit der Änderung, daß anstelle der Reibmaterialmischung (A) die Reibmaterialmischung (B) verwendet wurde. Nach dem Preßvorgang war der Belag locker mit der Belagrückenplatte verbunden. Auch nach dem Härten unter einem Anpreßdruck zeigte das System keine ausreichende Haftung zwischen Belag und Trägerplatte. Abscherwerte konnten deshalb nicht ermittelt werden, während die Klebefuge vollständig brach.

## Patentansprüche

1. Verwendung eines Cyanatharz-Klebers zum Verkleben von Reibbelägen auf einem Substrat, wobei der Kleber **gekennzeichnet ist durch** die folgenden Bestandteile:
a) 5 - 80 Gew.-% Cyanatharz
b) 5 - 30 Gew.-% organisches Polymer, ausgewählt unter natürlichem und synthetischem Kautschuk und thermoplastischen Polymeren,
c) 0 - 20 Gew.-% eines Verstärkungsmaterials und ggf.
d) weitere Zusatzstoffe und Hilfsmittel.

2. Verwendung nach Anspruch 1 zum Verkleben von cyanathaltigen Reibbelägen.

3. Verwendung nach Anspruch 1 oder 2, worin das Cyanatharz aus einem oder einer Mehrzahl von Cyanaten, ausgewählt unter bifunktionellen Cyanaten der Formel (I) 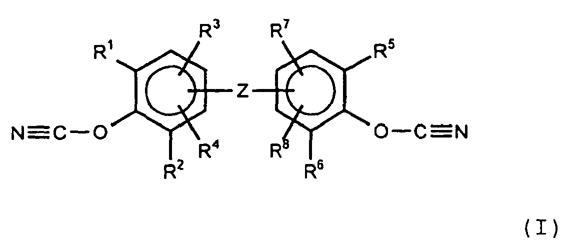 worin R¹ bis R⁴ und R⁵ bis R⁸ unabhängig voneinander Wasserstoff, fakultativ substituiertes C₁-C₁₀-Alkyl, fakultativ substituiertes C₃-C₈-Cycloalkyl, fakultativ substituiertes C₁-C₁₀-Alkoxy, Halogen, Phenyl oder Phenoxy sind und Z eine chemische Bindung, SO₂, CH₂, CH(CH₃), Isopropyl, Hexafluorisopropylen, n- oder iso-C₁-C₁₀-Alkylen, O, NR⁹, N=N, CH=CH, C(O)O, CH=N, CH=N-N=CH, Alkylenoxyalkylen mit 1 bis 8 Kohlenstoffatomen in der einen Alkylengruppe und 0 bis 8 Kohlenstoffatome in der anderen Alkylengruppe, S, Si(CH₃)₂ oder 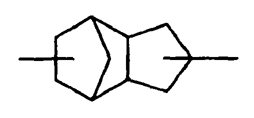 ist,
polyfunktionellen Cyanaten der Formel (II): 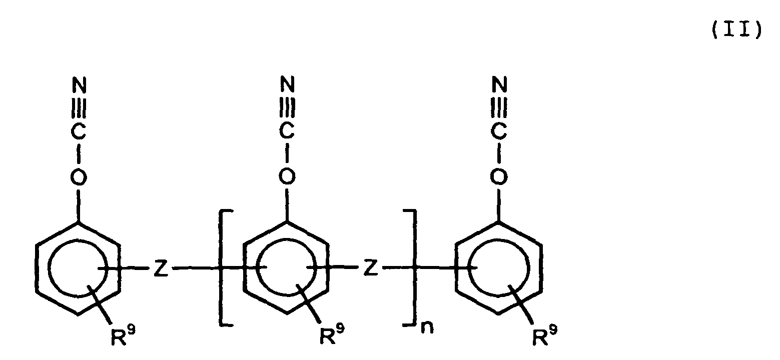 worin R⁹ Wasserstoff oder C₁-C₁₀-Alkyl ist und n 0 bis 20 ist und Z die für Formel (I) genannte Bedeutung hat,
und
einkernigen bifunktionellen Cyanaten mit der Formel (III): 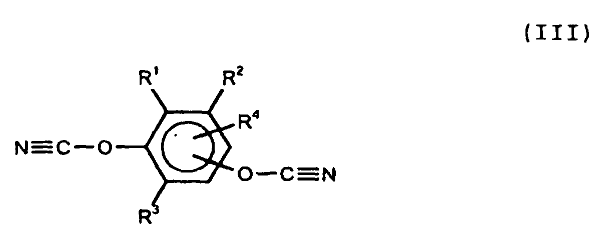 worin R¹ bis R⁴ unabhängig voneinander Wasserstoff, fakultativ substituiertes C₁-C₁₀-Alkyl, fakultativ substituiertes C₃-C₈-Cycloalkyl, fakultativ substituiertes C₁-C₁₀-Alkoxy, Halogen, Phenyl oder Phenoxy sind,
oder einem oder mehreren Präpolymeren der vorgenannten Cyanate, besteht oder diese enthält.

4. Verwendung nach einem der Ansprüche 1 bis 3, **dadurch gekennzeichnet, daß** das Cyanatharz zusätzlich Novolake, Bismaleimide und/oder Epoxide enthält, wobei die genannten Zusätze vorzugsweise in einer Menge von nicht mehr als 20 Gew.-% vorhanden sind.

5. Verwendung nach Anspruch 4, **dadurch gekennzeichnet, daß** die zusätzlichen Bestandteile in Mischung mit den Cyanaten vorliegen.

6. Verwendung nach Anspruch 4, **dadurch gekennzeichnet, daß** die zusätzlichen Bestandteile in copolymerisierter Form vorliegen.

7. Verwendung nach einem der voranstehenden Ansprüche, **dadurch gekennzeichnet, daß** das Cyanatharz in einer Menge von nicht mehr als 50 Gew.-%, bevorzugt von 15 bis 30 Gew.-% vorhanden ist.

8. Verwendung einer Cyanatharz-Kleber-Suspension oder -Lösung beim Verkleben von Reibbelägen auf einem Substrat, wobei die Suspension oder Lösung **gekennzeichnet ist durch** die folgenden Bestandteile:
a) 2 - 50 Gew.-% Cyanatharz wie in einem der Ansprüche 1 bis 5 definiert,
b) 2 - 20 Gew.-% organisches Polymer, ausgewählt unter natürlichem und synthetischem Kautschuk und thermoplastischen Polymeren,
c) 0 - 15 Gew.-% eines Verstärkungsmaterials,
d) 5 bis 75 Gew.-% eines Lösungsmittels für das Cyanatharz und ggf.
e) weitere Zusatzstoffe und Hilfsmittel.

9. Verwendung nach Anspruch 8 zum Verkleben von cyanathaltigen Reibbelägen.

10. Kit, **gekennzeichnet durch** einen Cyanatharz-Kleber wie in einem der Ansprüche 1 und 3 bis 7 definiert oder eine Cyanatharz-Kleber-Suspension oder -Lösung wie in Anspruch 8 definiert sowie eine Reibmaterialmischung mit den folgenden Bestandteilen:
a) 2 bis 50 Gew.-%, bevorzugt etwa 2 bis 20 Gew.-% eines Cyanatharzes, wie es in einem der Ansprüche 1 bis 5 für den Klebstoff definiert wurde,
b) 45 bis 98 Gew-%, bevorzugt 80-90 Gew.-% eines Verstärkungsmaterials, und ggf.
c) weiteren Zusätzen, bevorzugt ausgewählt unter Modifikatoren, Plastifizierern und Vernetzungsbeschleunigern.

11. Kit nach Anspruch 10, worin das Cyanatharz der Reibmaterialmischung identisch oder chemisch sehr ähnlich mit dem Cyanatharz des Cyanatharz-Klebers ist.

12. Kit nach Anspruch 10 oder 11, worin das Verstärkungsmaterial der Reibmaterialmischung identisch oder chemisch sehr ähnlich mit dem Verstärkungsmaterial des Cyanatharz-Klebers ist.

13. Auf einem Substrat haftender Reibbelag, hergestellt durch Verkleben und Verpressen des Reibmaterials des Kits gemäß einem der Ansprüche 10 bis 12 mit Hilfe des Cyanatharz-Klebers des genannten Kits.

14. Verfahren zum Herstellen eines Reibbelags auf einem Substrat, **dadurch gekennzeichnet, daß** der Belag mit einem Cyanatharz-Kleber wie in einem der Ansprüche 1 und 3 bis 7 definiert oder einer Cyanatharz-Kleber-Lösung oder
-Suspension wie in Anspruch 8 definiert auf dem Substrat aufgebracht wird, worauf das Substrat bei einer Temperatur von Raumtemperatur bis etwa 200°C mit einer Reibmaterialmischung verpreßt wird.

## Claims

1. Use of a cyanate resin adhesive for adhering friction linings to a substrate, wherein the adhesive is **characterised by** the following components:
a) 5 - 80 wt.% of cyanate resin
b) 5 - 30 wt.% of organic polymer, selected from natural and synthetic rubber and thermoplastic polymers,
c) 0 - 20 wt.% of a reinforcing material and optionally
d) further additives and auxiliaries.

2. Use according to claim 1 for adhering cyanate-containing friction linings.

3. Use according to claim 1 or 2, wherein the cyanate resin consists of one or a plurality of cyanates, selected from bifunctional cyanates of the formula (I) 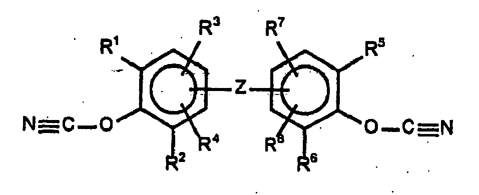 wherein R¹ to R⁴ and R⁵ to R⁸ independently of one another are hydrogen, optionally substituted C₁-C₁₀ alkyl, optionally substituted C₃-C₈ cycloalkyl, optionally substituted C₁-C₁₀ alkoxy, halogen, phenyl or phenoxy and Z is a chemical bond, SO₂, CH₂, CH(CH₃), isopropyl, hexafluoroisopropylene, n-C₁-C₁₀ alkylene or iso-C₁-C₁₀ alkylene, O, NR⁹, N=N, CH=CH, C(O)O, CH=N, CH=N-N-CH, alkylene-oxyalkylene having 1 to 8 carbon atoms in the one alkylene group and 0 to 8 carbon atoms in the other alkylene group, S, Si(CH₃)₂ or 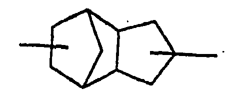 polyfunctional cyanates of the formula (II): 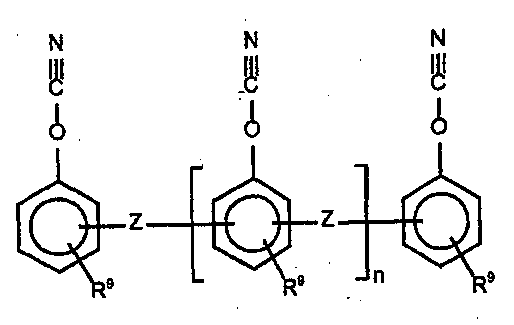 wherein R⁹ is hydrogen or C₁-C₁₀ alkyl and n is 0 to 20 and Z has the meaning mentioned for formula (I), and
mononuclear bifunctional cyanates having the formula (III): 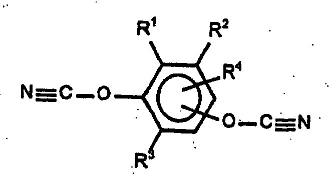 wherein R¹ to R⁴ independently of one another are hydrogen, optionally substituted C₁-C₁₀ alkyl, optionally substituted C₃-C₈ cycloalkyl, optionally substituted C₁-C₁₀ alkoxy, halogen, phenyl or phenoxy,
or one or more prepolymers of the afore-mentioned cyanates, or contains the latter.

4. Use according to one of claims 1 to 3, **characterised in that** the cyanate resin additionally contains novolaks, bismaleic acid imides and/or epoxides, wherein the said additives are preferably present in a quantity of not more than 20 wt.%.

5. Use according to claim 4, **characterised in that** the additional components are present mixed with the cyanates.

6. Use according to claim 4, **characterised in that** the additional components are present in copolymerised form.

7. Use according to one of the above claims, **characterised in that** the cyanate resin is present in a quantity of not more than 50 wt.%, preferably from 15 to 30 wt.%.

8. Use of a cyanate resin adhesive suspension or solution when adhering friction linings to a substrate, wherein the suspension or solution is **characterised by** the following components:
a) 2 - 50 wt.% of cyanate resin as defined in one of claims 1 to 5,
b) 2 - 20 wt.% or organic polymer, selected from natural and synthetic rubber and thermoplastic polymers,
c) 0 *-* 15 wt.% of a reinforcing material,
d) 5 to 75 wt.% of a solvent for the cyanate resin and optionally
e) further additives and auxiliaries.

9. Use according to claim 8 for adhering cyanate-containing friction linings.

10. Kit **characterised by** a cyanate resin adhesive as defined in one of claims 1 and 3 to 7 or a cyanate resin adhesive suspension or solution as defined in claim 8 and a friction material mixture having the following components:
a) 2 to 50 wt.%, preferably about 2 to 20.wt.%, of a cyanate resin, as has been defined in one of claims 1 to 5 for the adhesive,
b) 45 to 98 wt.%, preferably 80-90 wt.%, of a reinforcing material, and optionally
c) further additives, preferably selected from modifiers, plasticisers and crosslinking accelerators.

11. Kit according to claim 10, wherein the cyanate resin of the friction material mixture is identical or chemically very similar to the cyanate resin of the cyanate resin adhesive.

12. Kit according to claim 10 or 11, wherein the reinforcing material of the friction material mixture is identical or chemically very similar to the reinforcing material of the cyanate resin adhesive.

13. Friction lining adhering to a substrate, produced by adhering and moulding the friction material of the kit according to one of claims 10 to 12 with the aid of the cyanate resin adhesive of the said kit.

14. Process for producing a friction lining on a substrate, **characterised in that** the lining is applied to the substrate using a cyanate resin adhesive as defined in one of claims 1 and 3 to 7 or a cyanate resin adhesive solution or suspension as defined in claim 8, whereupon the substrate is moulded with a friction material mixture at a temperature from room temperature to about 200°C.

## Revendications

1. Utilisation d'un adhésif à base de résine de cyanate pour faire adhérer des garnitures de friction sur un substrat, l'adhésif étant **caractérisé par** les composants suivants :
a) 5 - 80 % en poids de résine de cyanate
b) 5 - 30 % en poids de polymère organique, choisi entre le caoutchouc naturel, un caoutchouc synthétique et des polymères thermoplastiques,
c) 0 - 20 % en poids d'une matière de renforcement et le cas échéant
d) d'autres additifs et substances auxiliaires.

2. Utilisation suivant la revendication 1, pour faire adhérer des garnitures de friction contenant un cyanate.

3. Utilisation suivant la revendication 1 ou 2, dans laquelle la résine au cyanate est constituée par ou contient un ou plusieurs cyanates choisis entre
des cyanates bifonctionnels de formule (I) 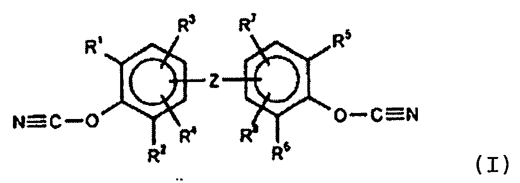 dans laquelle R¹ à R⁴ et R⁵ à R⁸ représentent, indépendamment les uns des autres, l'hydrogène, un reste alkyle en C₁ à C₁₀ facultativement substitué, un reste cycloalkyle en C₃ à C₈ facultativement substitué, un reste alkoxy en C₁ à C₁₀ facultativement substitué, un halogène, un reste phényle ou phénoxy et Z représente une liaison chimique, SO₂, CH₂, CH(CH₃), un reste isopropyle, hexafluorisopropylène, n- ou isoalkylène en C₁ à C₁₀, O, NR⁹, N=N, CH=CH, C(O)O, CH=N, CH=N-N=CH, un reste alkylène-oxy-alkylène ayant 1 à 8 atomes de carbone dans l'un des groupes alkylène et 0 à 8 atomes de carbone dans l'autre groupe alkylène, S, Si (CH₃)₂ ou 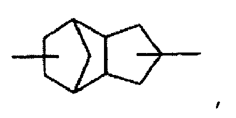 des cyanates polyfonctionnels de formule (II) : 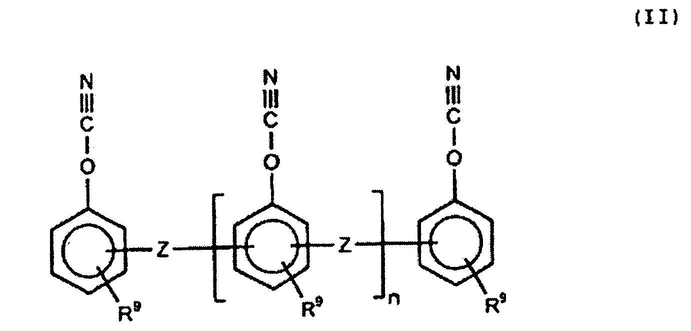 dans laquelle R⁹ représente l'hydrogène ou un reste alkyle en C₁ à C₁₀ et n a une valeur de 0 à 20, et Z a la définition mentionnée pour la formule (I), et
des cyanates bifonctionnels monocycliques de formule (III) : 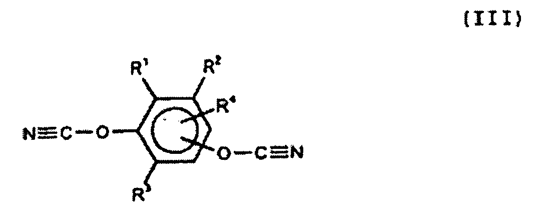 dans laquelle R¹ à R⁴ représentent, indépendamment les uns des autres, l'hydrogène, un reste alkyle en C₁ à C₁₀ facultativement substitué, un reste cycloalkyle en C₃ à C₈ facultativement substitué, un reste alkoxy en C₁ à C₁₀ facultativement substitué, un halogène, un reste phényle ou phénoxy, ou un ou plusieurs prépolymères des cyanates mentionnés.

4. Utilisation suivant l'une des revendications 1 à 3, **caractérisée en ce que** la résine de cyanate contient en outre des novolaques, des bismaléimides et/ou des époxydes, les additifs mentionnés étant avantageusement présents en une quantité ne dépassant pas 20 % en poids.

5. Utilisation suivant la revendication 4, **caractérisée en ce que** les composants additionnels sont présents en mélange avec les cyanates.

6. Utilisation suivant la revendication 4, **caractérisée en ce que** les composants additionnels sont présents sous la forme copolymérisée.

7. Utilisation suivant l'une des revendications précédentes, **caractérisée en ce que** la résine de cyanate est présente en une quantité ne dépassant pas 50 % en poids, avantageusement en une quantité de 15 à 30 % en poids.

8. Utilisation d'une suspension ou solution d'adhésif à base de résine de cyanate pour faire adhérer des garnitures de friction sur un substrat, la suspension ou solution étant **caractérisée par** les composants suivants :
a) 2 - 50 % en poids de résine de cyanate telle que définie dans l'une des revendications 1 à 5,
b) 2 - 20 % en poids de polymère organique choisi entre le caoutchouc naturel et un caoutchouc synthétique, et des polymères thermoplastiques,
c) 0 - 15 % en poids d'une matière de renforcement,
d) 5 à 75 % en poids d'un solvant pour la résine de cyanate et le cas échéant
e) d'autres additifs et substances auxiliaires.

9. Utilisation suivant la revendication 8 pour faire adhérer des garnitures de friction comprenant un cyanate.

10. Nécessaire **caractérisé par** l'adhésif à base de résine de cyanate tel que défini dans l'une des revendications 1 et 3 à 7 ou une suspension ou solution d'adhésif à base de résine de cyanate telle que définie dans la revendication 8 ainsi qu'une matière de friction en mélange comprenant les composants suivants :
a) 2 à 50 % en poids, avantageusement environ 2 à 20 % en poids, d'une résine de cyanate, telle qu'elle a été définie pour l'adhésif dans l'une des revendications 1 à 5,
b) 45 à 98 % en poids, avantageusement 80 à 90 % en poids, d'une matière de renforcement, et le cas échéant,
c) d'autres additifs, avantageusement choisis entre des modificateurs, des plastifiants et des accélérateurs de réticulation.

11. Nécessaire suivant la revendication 10, dans lequel la résine de cyanate de la matière de friction en mélange est identique ou chimiquement très semblable à la résine de cyanate de l'adhésif à base de cette résine.

12. Nécessaire suivant la revendication 10 ou 11, dans lequel la matière de renforcement de la matière de friction en mélange est identique ou chimiquement très semblable à la matière de renforcement de l'adhésif à base de résine de cyanate.

13. Garniture de friction adhérant à un substrat, produite par adhérence et compression de la matière de friction du nécessaire selon l'une des revendications 10 à 12 à l'aide de l'adhésif à base de résine de cyanate du nécessaire mentionné.

14. Procédé de production d'une garniture de friction sur un substrat, **caractérisé en ce que** la garniture est appliquée sur le substrat avec un adhésif à base de résine de cyanate tel que défini dans l'une des revendications 1 et 3 à 7 ou une solution ou suspension d'adhésif à base de résine de cyanate comme définie dans la revendication 8, après quoi le substrat est assemblé par compression avec une matière de friction en mélange à une température allant de la température ambiante à environ 200°C.
